# FASCICULE DE BREVET EUROPEEN

(11) **EP 2 234 334 B1**
(45) Date de publication et mention de la délivrance du brevet: **22.01.2014**
(21) Numéro de dépôt: 10157409.3
(22) Date de dépôt: 23.03.2010
(51) Int. Cl.: H04L 12/26, H04L 12/851

(54) **Procédé permettant à un système de surveillance du réseau d'un opérateur de classifier des flux IP**
Verfahren zur Klassifizierung von IP datenflüssen in einer Netzwerküberwachungssystem.
Method for facilitating the classification of IP flows to an operator of a network monitoring system.

(30) Priorité: 25.03.2009 FR 0951943
(43) Date de publication de la demande: 29.09.2010
(73) Titulaire: Infovista SA, 91940 Les Ulis (FR)
(72) Inventeur: Berge, Christian, 37260, Artannes sur Indre (FR)
(74) Mandataire: Pontet Allano & Associes

(56) Documents cités:
- WO-A-02/33870
- US-A1- 2008 002 697
- US-A1- 2008 279 111
- EDITORS: GANESH SADASIVAN CISCO SYSTEMS ET AL: "Architecture Model for IP Flow Information Export; draft-ietf-ipfix-arch-02.txt" IETF STANDARD-WORKING-DRAFT, INTERNET ENGINEERING TASK FORCE, IETF, CH, vol. ipfix, no. 2, 1 octobre 2003 (2003-10-01), XP015020030 ISSN: 0000-0004
- SADASIVAN (IPFIX) CISCO SYSTEMS G ET AL: "Architecture for IP Flow Information Export; draft-ietf-ipfix-architecture-12.txt" ARCHITECTURE FOR IP FLOW INFORMATION EXPORT; DRAFT-IETF-IPFIX-ARCHITECTURE-12.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. ipfix, no. 12, 6 septembre 2006 (2006-09-06), XP015058281
- GERICH MERIT E: "Guidelines for Management of IP Address Space; rfc1466.txt", 19930501, 1 May 1993 (1993-05-01), XP015007253, ISSN: 0000-0003

## Description

La présente invention concerne un procédé permettant à un système de surveillance de classifier, par entité, des flux IP (« Internet Protocol ») dits éléments de comptabilisation (« accounting ») transitant via des routeurs ou commutateurs (« switch ») d'un réseau d'un fournisseur de service, ces entités étant disposées dans des sites différents.

La présente invention trouve une application dans la mesure des performances et de suivi de la qualité de service d'un système d'information. Elle concerne en particulier la collecte des informations de comptabilisation (« accounting ») IP provenant de routeurs de façon à réaliser du monitoring temps réel, des statistiques ou encore des enregistrements.

D'une façon générale, la complexité croissante des systèmes d'information qui intègrent notamment des architectures clients-serveurs et des réseaux locaux intégrés, rend de plus en plus difficile une gestion efficace de la qualité de service au sein de ces systèmes. D'une part, les administrateurs et responsables de ces systèmes d'information sont amenés à adopter une démarche de service à l'égard des utilisateurs et à opérer en tant que prestataires de service soucieux de la qualité des services fournis tout en étant confrontés à des réductions de coût d'exploitation, et d'autre part, les utilisateurs de ces services réclament des niveaux de qualité de service toujours plus élevés.

La maîtrise de la qualité de service implique un système fiable de remontée des informations pertinentes en provenance des différentes ressources du système d'information. Pour cela, on doit exploiter des gisements de données de performance de grand volume résidant dans les équipements d'un réseau, dans les systèmes et dans les applications logicielles

Une des méthodes utilisées afin d'analyser les flux IP transitant au travers du réseau d'un opérateur consiste à configurer des routeurs PE (Provider Edge) de façon à leur faire générer puis émettre des informations de comptabilisation (« accounting ») (via NetFlow, sflow, IPFix...) à destination d'un ou plusieurs systèmes capables d'analyser et d'agréger celles-ci.

Concrètement, en configurant les routeurs PE afin de leur faire émettre, par exemple, des enregistrements selon le protocole NetFlow V5 à destination d'un système de surveillance, il est possible de générer des statistiques de volumétrie et des matrices de flux ventilées par protocole, adresse IP, port TCP/UDP, etc... et ce, pour la totalité du trafic ayant traversé le réseau de l'opérateur.

Cependant, dans le contexte particulier du réseau d'un opérateur, il est courant que les plans d'adressage IP en vigueur sur les sites des différents clients se recoupent, c'est-à-dire que deux machines ou applications différentes dans des sous-réseaux clients différents connectés à un même réseau opérateur (fournisseur de service) comporte une même adresse IP. Lorsque cela se produit, la signification des statistiques réalisées par le système de surveillance sur la base des adresses IP peut être fortement altérée.

Par opérateur, on entend une entreprise qui propose des services réseau à différents clients. La ressource « réseau » n'est donc pas dédiée à un client particulier mais partagée entre plusieurs clients, d'où les risques de recoupement des plans d'adressage.

En effet, 2 entités partageant la même adresse IP seront vues comme une seule et même entité sur laquelle seront cumulés des flux de natures différentes.

Cette situation est d'autant plus critique lorsque, dans un tel système de surveillance, les adresses IP sont utilisées pour identifier, non seulement les serveurs et les principales applications, mais aussi l'appartenance de ceux-ci et de leurs clients à différents sites géographiques.
- La corrélation entre adresse IP et application est alors réalisée via l'établissement par le client d'un « référentiel applicatif » qui associe à chaque application un ensemble d'adresses IP et de ports pour un protocole donné (UDP/TCP)
- La corrélation entre adresse IP et site géographique est, elle, réalisée via l'établissement par le client d'un « référentiel géographique » qui associe à chaque site géographique un ensemble d'adresses IP.

Le recouvrement des plans d'adressage IP conduit automatiquement à un recouvrement des référentiels applicatifs et géographiques des différents clients.

Ce recouvrement des référentiels des différents clients a pour résultat l'impossibilité pour le système de surveillance de prendre des décisions fiables quant à l'appartenance d'une adresse IP à tel ou tel site géographique ou l'identification d'un serveur d'application.

On connaît le document US 2008/0002697 A1 décrivant une méthode pour capturer des données de trafic entre deux sites d'un réseau MPLS-VPN en calculant une adresse IP d'un PE source et un nom d'interface d'un PE source pour chaque enregistrement de flux reçu sur un routeur PE destination, et en identifiant un site VPN source à partir de l'adresse IP calculée du PE source et du nom de l'interface PE source pour chaque enregistrement de flux.

La présente invention vise à pallier les inconvénients ci-dessus en proposant un nouveau procédé pour collecter et classer efficacement des informations pertinentes depuis des routeurs d'un réseau opérateur.

Un autre but de l'invention est de proposer un procédé simple à mettre en oeuvre en utilisant des outils existants.

On atteint au moins l'un des objectifs précités avec un procédé suivant la revendication 1.

Avec le procédé selon l'invention, on utilise les informations relatives aux interfaces de sortie et d'entrée des routeurs pour discriminer des flux IP. Chaque interface d'un routeur du réseau est associée à un site donné. En plus des adresses IP qui sont collectées de façon conventionnelles, avec le procédé selon l'invention on ajoute d'autres critères de classement que sont les informations d'interface de sortie et d'entrée ou interface de destination et source. A chaque adresse source, on lui associe son site. Selon le protocole utilisé, on configure correctement les routeurs de façon à ce que ces informations relatives aux interfaces soient collectées par le système de surveillance.

Selon une caractéristique de l'invention, chaque site est identifié par un référentiel géographique qui associe à chaque site géographique un ensemble d'adresses IP. Le référentiel géographique peut être une table de correspondance entre des plages d'adresses IP et des localisations géographiques comme des immeubles, des régions, des pays, etc.... En complément ou en variante de ce qui précède, chaque site est identifié par un référentiel applicatif qui associe à chaque application d'une entité un ensemble d'adresses IP et de ports pour un protocole donné.

Selon l'invention, lesdits routeurs sont des routeurs dits « Provider Edge ». Par ailleurs, chaque entité comprend au moins un routeur dit « Customer Edge » et au moins un serveur d'application.

Avantageusement, le système de surveillance utilise le protocole Netflow pour collecter les éléments de comptabilisation depuis les routeurs.

Selon un mode de mise en oeuvre avantageux de l'invention, les entités sont réparties en groupes, chaque groupe comportant un plan d'adressage IP ; et en ce que des plans d'adressage IP de différents groupes se recoupent.

La présente invention permet ainsi la réalisation d'un plan d'adressage IP dans un sous-réseau, indépendamment des plans d'adressages des autres sous-réseaux, ces sous-réseaux étant connectés à un même réseau opérateur.

D'autres avantages et caractéristiques de l'invention apparaîtront à l'examen de la description détaillée d'un mode de mise en oeuvre nullement limitatif, et d'une unique figure annexée qui est une vue générale d'un réseau d'un opérateur selon la présente invention.

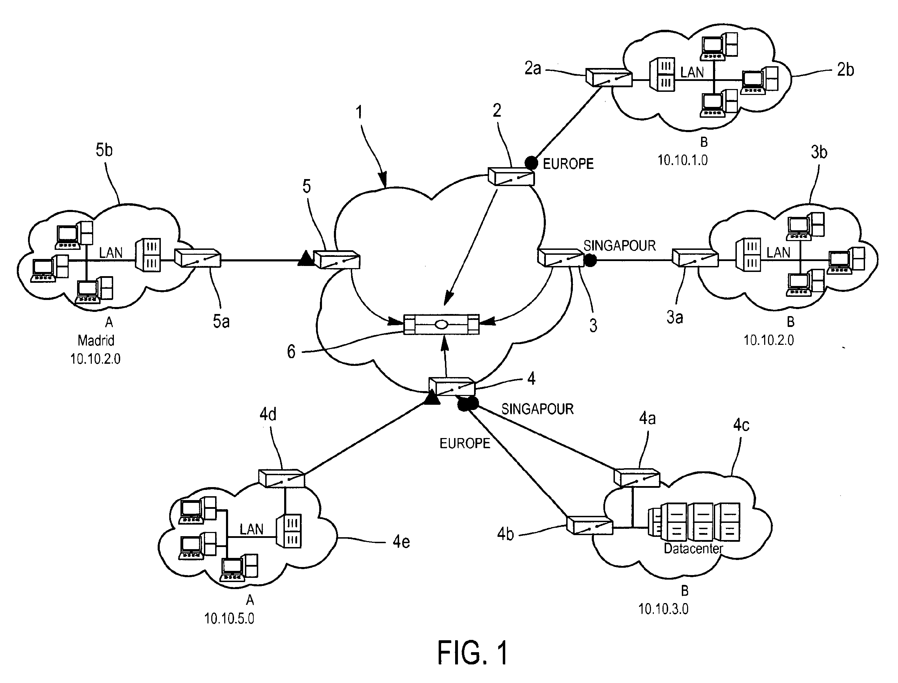

Sur l'unique figure 1 on voit un réseau 1 d'un fournisseur de service selon l'invention. Ce réseau comprend des routeurs 2 à 5 de type PE pour « Provider Edge » en anglais. Un système de surveillance 6 est connecté à chacun des routeurs PE de façon à collecter des informations de comptabilisation transitant via ces routeurs PE. Chaque routeur PE est destiné à un lieu géographique donné et/ou à des applications données. Ces routeurs sont connectés à des sous-réseaux des clients A et B.

Par exemple, le routeur 2 du réseau opérateur 1 est destiné à l'Europe et est connecté à un sous-réseau LAN 2b du client B via un routeur CE (« Customer Edge ») 2a. L'adresse IP pour ce sous-réseau LAN est par exemple 10.10.1.0.

De la même manière, le routeur 3 du réseau opérateur 1 est destiné à Singapour et est connecté à un sous-réseau LAN 3b du même client B via un routeur CE 3a. L'adresse IP pour ce sous-réseau LAN est par exemple 10.10.2.0.

Le routeur 4 du réseau opérateur 1 est par contre destiné à plusieurs lieux géographiques, Singapour et Europe, mais également à plusieurs applicatifs. En effet, ce routeur 4 est connecté à un sous-réseau « Datacenter » 4c du même client B via un routeur CE 4a au moyen d'une liaison VPN (« Virtual Private Network ») par Singapour et via un routeur CE 4b au moyen d'une liaison VPN (« Virtual Private Network ») par l'Europe. Les deux routeurs CE 4a et 4b font partie d'un même sous-réseau 4c. L'adresse IP pour ce sous-réseau « Datacenter » 4c est par exemple 10.10.3.0.

Le routeur PE 4 gère également un sous-réseau LAN 4e du client A via un routeur CE 4d. L'adresse IP pour ce sous-réseau LAN est par exemple 10.10.5.0.

Le routeur 5 du réseau opérateur 1 est destiné à la ville de Madrid en Espagne et est connecté à un sous-réseau LAN 5b du client A via un routeur CE 5a. L'adresse IP pour ce sous-réseau LAN est par exemple 10.10.2.0.

Les liaisons entre les routeurs PE et les routeurs CE sont de type VPN.

Chaque client possède un plan d'adressage IP qui est lui est propre.
Mais on voit que lorsque ces sous-réseaux sont connectés au réseau 1 du fournisseur de service, des problèmes de correspondance entre entité et adresse IP pourraient subvenir puisque des entités différentes entre les clients A et B possèdent la même adresse IP : 10.10.2.0.

Pour éviter ce problème selon l'invention, on s'assure que chaque information de comptabilisation générée par les routeurs PE contient bien les notions d'interface source et destination. Notamment, si la communication entre les routeurs PE 2-5 et le système de surveillance 6 s'effectue au moyen du protocole NetFlow V9 avec des modèles ou « templates » définis par l'utilisateur, on s'assure de la présence de ces champs « interface source » et « interface destination » dans les « templates ».

Le procédé selon l'invention est mis en oeuvre au sein du système de surveillance, et consiste :
- à repérer les interfaces des routeurs PE qui sont dédiées à des sites clients puis à associer à chacune d'elle les référentiels applicatifs et géographiques adéquats, comme indiqué sur la figure 1 : les interfaces associées aux référentiels applicatifs et géographiques du client A étant identifiées par des triangles, alors que les interfaces associées aux référentiels applicatifs et géographiques du client B sont identifiées par des cercles ; puis
- lors de l'analyse d'un élément de comptabilisation en provenance d'un routeur PE, à utiliser les informations relatives aux interfaces source et destination contenues dans cet élément afin de pointer sur les référentiels correspondants.

On peut en effet estimer que dès lors qu'un message IP est transmis sur une interface dédiée à un client, son adresse IP ne peut qu'être en conformité avec le plan d'adressage du client en question.

Ci-dessous un tableau illustrant un exemple de référentiels applicatifs et géographiques entre clients A et B du réseau opérateur 1.

| **Client A :** | **Client B :** |
|---|---|
| Référentiel applicatif : | Référentiel applicatif : |
| • Application A1 = IP 10.10.2.20 / TCP 1532 | • Application B1 = IP 10.10.2.20 / TCP |
| • Application A2 = IP 10.10.2.21 / TCP 1532 | 1532 |
| Référentiel Géographique: • Madrid = 10.10.2.0 - 10.10.2.255 | • Application B2 = IP 10.10.2.23 / TCP 1532 |
| • Paris = 10.10.5.0 - 10.10.5.255 | Référentiel Géographique: |
| | • Europe = 10.10.1.0 - 10.10.1.255 |
| | • Singapour = 10.10.2.0 - 10.10.2.255 |
| | • Datacenter = 10.10.3.0 - 10.10.3.255 |

On se trouve dans le cas où deux entités distinctes utilisent la même adresse IP : 10.10.2.15 :
- L'entité A est située sur le site Madrid du client A
- L'entité B est située sur le site Singapour du client B

Avec un système selon l'art antérieur, il est impossible de distinguer les deux entités, les informations relatives aux flux issus de l'entité A et de l'entité B sont donc malencontreusement cumulées. Par ailleurs, il est impossible de décider à quel site affecter l'adresse 10.10.2.15, en effet, il y a deux candidats possibles : Madrid et Singapour.

Par contre, avec le système selon la présente invention, lorsque les informations relatives à l'adresse IP 10.10.2.15 sont remontées par une interface affectée au client A, le référentiel du client A est utilisé par le système de surveillance. Le site géographique est automatiquement reconnu comme étant Madrid et les flux sont comptabilisés sur l'entité A. Et lorsque les informations relatives à l'adresse IP 10.10.2.15 sont remontées par une interface affectée au client B, le référentiel du client B est utilisé par le système de surveillance. Le site géographique est automatiquement reconnu comme étant Singapour et les flux sont comptabilisés sur l'entité B.

Ainsi, avec le procédé selon l'invention, on utilise les notions d'interfaces source et destination véhiculées dans les informations de comptabilisation (« accounting ») IP (NetFlow, sflow, IPFix, etc...) afin de réaliser de façon fiable les fonctions de classification, de comptage, de ventilation et de corrélation avec les référentiels propres à chaque client, des flux IP transitant sur le réseau d'un opérateur même lorsque les plans d'adressage IP en vigueur sur les sites des clients se recoupent.

Bien sûr, l'invention n'est pas limitée aux exemples qui viennent d'être décrits et de nombreux aménagements peuvent être apportés à ces exemples sans sortir du cadre de l'invention.

## Revendications

1. Procédé permettant à un système de surveillance de classifier par entité des flux IP (« Internet Protocol ») dits éléments d' « accounting » transitant via des routeurs ou switch d'un réseau d'un fournisseur de service, ces entités étant disposées dans des sites différents connectés audit réseau,
- le système de surveillance (6) associe à chaque site une interface d'un routeur ou switch auquel ce site est relié, et
- lors d'une analyse par le système de surveillance (6) d'un élément d'accounting en provenance d'un routeur ou switch, le système de surveillance (6) utilise des informations d'interface source et d'interface destination contenues dans cet élément d'accounting afin d'identifier les sites source et destination et classifier cet élément d'accounting par rapport à la bonne entité source ou destination, **caractérisé en ce que** :
- les entités sont réparties en groupes, chaque groupe comportant un plan d'adressage IP ; et **en ce que** des plans d'adressage IP de différents groupes se recoupent, et
**en ce que** chaque site est identifié par un référentiel géographique, le référentiel géographique étant une table de correspondance entre des plages d'adresses IP et des localisations géographiques.

2. Procédé selon la revendication 1, **caractérisé en ce que** chaque site est identifié par un référentiel applicatif qui associe à chaque application d'une entité un ensemble d'adresses IP et de ports pour un protocole donné.

3. Procédé selon l'une quelconque des revendications précédentes, **caractérisé en ce que** lesdits routeurs sont des routeurs dits « Provider Edge », (2, 3, 4, 5).

4. Procédé selon l'une quelconque des revendications précédentes, **caractérisé en ce que** chaque entité comprend au moins un routeur dit « Customer Edge » (2a, 3a, 4a, 4b, 4d, 5a) et au moins un serveur d'application.

5. Procédé selon l'une quelconque des revendications précédentes, **caractérisé en ce que** le système de surveillance utilise le protocole Netflow pour collecter les éléments de comptabilisation depuis les routeurs.

## Patentansprüche

1. Verfahren, wodurch ein Überwachungssystem IP-Ströme ("Internet Protocol"), sogenannte "Accounting"-Elemente, deren Verkehr über Routers oder Switches eines Netzwerks eines Dienstanbieters erfolgt, nach Einheiten zuordnet, wobei jene Einheiten in verschiedenen, an dieses Netzwerk angeschlossenen Standorten gelagert sind,
- das Überwachungssystem (6) weist jedem Standort eine Schnittstelle eines Routers oder Switches zu, mit dem der Standort verbunden ist, und
- bei einer Untersuchung eines von einem Router oder Switch ausgehenden Accounting-Elements durch das Überwachungssystem (6) verwendet das Überwachungssystem (6) in diesem Accounting-Element enthaltene Daten zur Quell- und zur Zielschnittstelle, um die Quell- und die Zielstandorte zu identifizieren und dieses Accounting-Element entsprechend der richtigen Quell- bzw. Zieleinheit zuzuordnen, **dadurch gekennzeichnet, dass**:
- die Einheiten in Gruppen aufgeteilt sind, wobei jede Gruppe einen IP-Adressierungsplan umfasst; und dadurch, dass IP Adressierungspläne verschiedener Gruppe miteinander übereinstimmen, und
- dadurch, dass jeder Standort über ein geographisches Merkmal identifiziert wird, wobei das geographische Merkmal eine Zustandstabelle zwischen IP-Adressbereichen und geographischen Lagen ist.

2. Verfahren nach Anspruch 1, **dadurch gekennzeichnet, dass** jeder Standort über ein Anwendungsmerkmal identifiziert wird, welches jeder Anwendung einer Einheit einen Satz von IP-Adressen und Anschlüssen für ein bestimmtes Protokoll zuordnet.

3. Verfahren nach einem der vorhergehenden Ansprüche, **dadurch gekennzeichnet, dass** jene Routers sogenannte "Provider Edge" Router (2, 3, 4, 5) sind.

4. Verfahren nach einem der vorhergehenden Ansprüche, **dadurch gekennzeichnet, dass** jede Einheit mindestens einen sogenannten "Customer Edge" Router (2a, 3a, 4a, 4b, 4d, 5a) und mindestens einen Anwendungsrouter umfasst.

5. Verfahren nach einem der vorhergehenden Ansprüche, **dadurch gekennzeichnet, dass** das Überwachungssystem das Netflow Protokoll verwendet, um die Erfassungselemente ab den Routern zu sammeln.

## Claims

1. Method allowing a monitoring system to classify, by entity, IP (Internet Protocol) flows called accounting elements passing through routers or switches of a network of a service provider, these entities being arranged in different sites connected to said network,
- the monitoring system (6) associates each site with an interface of a router or switch to which this site is connected, and
- during an analysis by the monitoring system (6) of an accounting element originating from a router or switch, the monitoring system (6) uses information relating to the source interface and destination interface contained in this accounting element in order to identify the source and destination sites and to classify this accounting element with respect to the correct source or destination entity, **characterized in that**:
- the entities are distributed in groups, each group comprising an IP addressing plan; and **in that** the IP addressing plans of different groups overlap, and
- each site is identified by a geographical repository, the geographical repository being a correspondence table between IP addresses and geographical site.

2. Method according to claim 1, **characterized in that** each site is identified by an application repository which associates a set of IP addresses and ports for a given protocol with each application of an entity.

3. Method according to any one of the preceding claims, **characterized in that** said routers are so-called "Provider Edge" routers (2, 3, 4, 5).

4. Method according to any one of the preceding claims, **characterized in that** each entity comprises at least one so-called "Customer Edge" router (2a, 3a, 4a, 4b, 4d, 5a) and at least one application server.

5. Method according to any one of the preceding claims, **characterized in that** the monitoring system uses the Netflow protocol for collecting the accounting elements from the routers.
